# EUROPÄISCHE PATENTSCHRIFT

(11) **EP 2 740 664 B1**
(45) Veröffentlichungstag und Bekanntmachung des Hinweises auf die Patenterteilung: **17.04.2019**
(21) Anmeldenummer: 13190494.8
(22) Anmeldetag: 28.10.2013
(51) Int. Cl.: E05C 3/14, B64D 11/06, B60N 3/00

(54) **Fahrzeugsitzverriegelungsvorrichtung**
Vehicle seats locking device
Dispositif de verrouillage de sièges de véhicule

(30) Priorität: 06.12.2012 DE 102012111887
(43) Veröffentlichungstag der Anmeldung: 11.06.2014
(73) Patentinhaber: Recaro Aircraft Seating GmbH & Co. KG, 74523 Schwäbisch Hall (DE)
(72) Erfinder: Philipzik, Fabian, 86179 Augsburg (DE); Mejuhas, Marsel, 74523 Schwäbisch Hall (DE)
(74) Vertreter: Daub, Thomas

(56) Entgegenhaltungen:
- DE-A1- 10 333 912
- US-A- 2 963 078
- US-A1- 2009 126 605

## Beschreibung

### Stand der Technik

Die Erfindung betrifft eine Fahrzeugsitzverriegelungsvorrichtung nach dem Oberbegriff des Patentanspruchs 1.

Es ist bereits eine Fahrzeugsitzverriegelungsvorrichtung, insbesondere eine Flugzeugsitzverriegelungsvorrichtung, mit zumindest einem Gegenstand, insbesondere einem Tisch, und mit zumindest einer Verriegelungseinheit, die zumindest ein Verriegelungselement aufweist und dazu vorgesehen ist, den Gegenstand in zumindest einer Verstaustellung zu verriegeln, vorgeschlagen worden. Das Verriegelungselement ist als ein Haken oder Knebel ausgebildet. Das Verriegelungselement ist an einer Rückenlehneneinheit einer Sitzeinheit drehbar in einer parallel zu einer von einer Gegenstandsoberfläche des in der Verstaustellung befindlichen Gegenstands aufgespannten Ebene ausgerichteten Rotationsebene gelagert. Die Verriegelungseinheit ist mittels einer Rotationsbewegung betätigbar. Um den Gegenstand aus der Verstaustellung herauszubewegen, ist zusätzlich zu der Entriegelungsbewegung, insbesondere der Rotationsbewegung in der Rotationsebene, eine weitere, zweite Bewegung erforderlich. In der Verstaustellung ist das Verriegelungselement unter Spannung Die DE10333912 zeigt eine Fahrzeugsitzverriegelungsvorrichtung mit einem Tisch, einer Verriegelungseinheit und mit einem Verriegelungselement, wobei die Fahrzeugsitzverriegelungsvorrichtung dazu vorgesehen ist, den Tisch in einer Verstaustellung zu verriegeln.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fahrzeugsitzverriegelungsvorrichtung, insbesondere einer Flugzeugsitzverriegelungsvorrichtung, mit zumindest einem Gegenstand, insbesondere einem Tisch, und mit zumindest einer Verriegelungseinheit, die zumindest ein Verriegelungselement aufweist und dazu vorgesehen ist, den Gegenstand in zumindest einer Verstaustellung zu verriegeln.

Es wird vorgeschlagen, dass die Verriegelungseinheit zumindest eine Zugbetätigungseinheit aufweist, die dazu vorgesehen ist, durch eine Zugbewegung an dem Verriegelungselement betätigbar zu sein, die in zumindest einer Bewegungsstellung zumindest eine Bewegungskomponente in Bewegungsrichtung des Gegenstands aufweist. Vorzugsweise ist die Verstaustellung als eine Verriegelungsstellung ausgebildet. Insbesondere ist der Gegenstand als ein Tisch ausgebildet. Insbesondere weist der als Tisch ausgebildete Gegenstand eine einzige Tischplatte auf. Insbesondere ist denkbar, dass der als Tisch ausgebildete Gegenstand als ein ausziehbarer und/oder klappbarer Tisch ausgebildet ist. Alternativ oder zusätzlich zu einer Ausbildung des Gegenstands als Tisch ist denkbar, dass der Gegenstand als eine Sitzbildschirmeinheit ausgebildet ist. Alternativ oder zusätzlich ist denkbar, dass der Gegenstand als eine Lampe, insbesondere als eine Leselampe, ausgebildet ist. Alternativ oder zusätzlich ist denkbar, dass der Gegenstand als eine Rückenlehneneinheit, eine Sitzbodeneinheit und/oder eine Armlehneneinheit ausgebildet ist. Ebenfalls denkbar ist, dass der Gegenstand als ein einem Fachmann als sinnvoll erscheinendes Bauteil ausgebildet ist. Insbesondere ist der Gegenstand an zumindest einem Flugzeugsitzbauteil gelagert.

Beispielsweise ist das Flugzeugsitzbauteil als eine Rückenlehneneinheit, eine Sitzbodeneinheit, eine Armlehneneinheit und/oder eine Aufständereinheit ausgebildet. Unter einer "Verriegelungseinheit" soll insbesondere eine Einheit verstanden werden, die dazu vorgesehen ist, den Gegenstand in der Verstaustellung zu verriegeln. Insbesondere ist die Verriegelungseinheit dazu vorgesehen, den Gegenstand bis zu einem aktiven Zutun, insbesondere bis zu einem aktiven Zutun eines Passagiers, in der Verstaustellung zu verriegeln. Vorzugswese ist die Verriegelungseinheit dazu vorgesehen, den Gegenstand so lange in der Verstaustellung zu verriegeln, bis die Verriegelungseinheit durch das aktive Zutun betätigt wird. Vorzugsweise ist die Verriegelungseinheit dazu vorgesehen, den Gegenstand unabhängig von weiteren äußeren Einflüssen, insbesondere von Erschütterungen und/oder weiteren äußeren Kräften, in der Verstaustellung zu verriegeln. Insbesondere ist die Verriegelungseinheit zumindest teilweise an dem Gegenstand gelagert. Unter "weiteren äußeren Einflüssen" sollen insbesondere Einflüsse verstanden werden, die über das aktive Zutun hinausgehen, wie beispielsweise Erschütterungen und/oder weitere äußere Kräfte, wie Beschleunigungen, Abbremsungen und/oder variierende Ausrichtungen des Gegenstands sowie der Verriegelungseinheit in einem Raum, insbesondere in einer Flugzeugkabine. Unter einem "aktiven Zutun" soll insbesondere eine aktiv, insbesondere von dem Passagier, vorgenommene Handlung verstanden werden. Insbesondere ist das aktive Zutun als die Zugbewegung ausgebildet. Erfindungsgemäß ist das aktive Zutun als eine Zugbewegung ausgebildet, die in zumindest einem Bewegungsabschnitt zumindest eine Bewegungskomponente in Bewegungsrichtung des Gegenstands aufweist. Unter der Wendung, dass die Verriegelungseinheit "zumindest teilweise an dem Gegenstand gelagert" ist, soll insbesondere verstanden werden, dass zumindest ein Element der Verriegelungseinheit an dem Gegenstand gelagert ist. Unter "vorgesehen" soll insbesondere speziell ausgelegt und/oder ausgestattet verstanden werden. Unter einer "Zugbetätigungseinheit" soll insbesondere eine Einheit verstanden werden, die durch die Zugbewegung an dem Verriegelungselement betätigbar ist. Insbesondere ist die Zugbetätigungseinheit als eine Zugentriegelungseinheit ausgebildet. Vorzugsweise ist die Verriegelungseinheit, insbesondere die Zugbetätigungseinheit, durch die Zugbewegung an dem Verriegelungselement entriegelbar. Unter einem "Verriegelungselement" soll insbesondere ein Element der Verriegelungseinheit verstanden werden. Insbesondere ist das Verriegelungselement dazu vorgesehen, durch das aktive Zutun betätigt, insbesondere bewegt, zu werden. Vorzugsweise ist das Verriegelungselement mit der Verriegelungseinheit gekoppelt. Insbesondere ist die Verriegelungseinheit durch eine Betätigung des Verriegelungselements betätigbar. Vorzugsweise ist das Verriegelungselement zumindest teilweise an dem Gegenstand gelagert. Vorteilhaft ist das Verriegelungselement zumindest zu einem Großteil an dem Gegenstand angeordnet. Vorteilhaft ist das Verriegelungselement zumindest zu einem Großteil an der Tischplatte des als Tisch ausgebildeten Gegenstands angeordnet. Vorteilhaft ist das Verriegelungselement zumindest zu einem Großteil an einer in der Verstaustellung der Rückenlehneneinheit abgewandten Seite der Tischplatte des als Tisch ausgebildeten Gegenstands angeordnet. Vorteilhaft ist das Verriegelungselement nicht an einem an dem Gegenstand befestigten und/oder angeordneten Element angeordnet. Unter der Wendung, dass das Verriegelungselement "zumindest zu einem Großteil" an dem Gegenstand angeordnet ist, soll insbesondere verstanden werden, dass das Verriegelungselement zu einem Massenanteil von mehr als 70 %, insbesondere von mehr als 80 % und vorteilhaft von mehr als 90 % an dem Gegenstand angeordnet ist. Beispielsweise ist das Verriegelungselement als ein Knebel und/oder als ein Haken und/oder als ein Hebel ausgebildet. Ebenfalls denkbar ist, dass das Verriegelungselement als eine Schlaufe, insbesondere als eine Schlaufe eines Seils, ausgebildet ist. Insbesondere ist das Verriegelungselement als ein Griff ausgebildet. Unter der Wendung, dass die Zugbewegung in zumindest einem Bewegungsabschnitt "zumindest eine Bewegungskomponente in Bewegungsrichtung des Gegenstands" aufweist, soll insbesondere verstanden werden, dass die Bewegungskomponente der Zugbewegung bei einer vektoriellen Betrachtung der Bewegungsrichtung des Gegenstands zumindest im Wesentlichen parallel zu einem Bewegungsvektor der Bewegungsrichtung ist. Unter einer "vektoriellen Betrachtung" der Bewegungsrichtung des Gegenstands soll insbesondere eine Betrachtung verstanden werden, bei welcher ein Vektor der Bewegungsrichtung in zwei zumindest im Wesentlichen senkrecht zueinander ausgerichtete Vektorteile, insbesondere Bewegungsvektoren, aufgeteilt ist. Insbesondere ergibt eine Anwendung einer Vektoraddition der beiden Vektorteile den Vektor der Bewegungsrichtung. Durch eine erfindungsgemäße Ausgestaltung kann vorteilhaft der Gegenstand mit einer einzigen Bewegung, insbesondere mit einer einzigen Handbewegung des Passagiers, in Richtung der Zugbewegung, die in dem Bewegungsabschnitt die Bewegungskomponente in Bewegungsrichtung des Gegenstands aufweist, insbesondere in Richtung des Passagiers, betätigt, insbesondere entriegelt, und bewegt werden, wodurch vorteilhaft ein Komfort für den Passagier erhöht werden kann. Zudem kann der Gegenstand, insbesondere in einer Notsituation, mit einer Handbewegung betätigt, insbesondere verriegelt, werden, wodurch vorteilhaft eine Sicherheit des Passagiers erhöht werden kann.

Ferner wird vorgeschlagen, dass die Verriegelungseinheit zumindest eine Schwenkachse aufweist, um die das Verriegelungselement schwenkbar gelagert ist. Insbesondere ist das Verriegelungselement schwenkbar in einer zumindest im Wesentlichen senkrecht zu einer Gegenstandsoberfläche des Gegenstands ausgerichteten Ebene gelagert. Vorzugsweise ist die Ebene, in welcher das Verriegelungselement schwenkbar gelagert ist, zumindest im Wesentlichen senkrecht zu der Gegenstandsoberfläche des Gegenstands sowie zumindest im Wesentlichen senkrecht zu der Gegenstandsschwenkachse ausgerichtet. Insbesondere ist die Schwenkachse zumindest im Wesentlichen parallel zu der von der Gegenstandsoberfläche des Gegenstands aufgespannten Ebene angeordnet. Vorzugsweise ist die Schwenkachse zumindest im Wesentlichen in der von der Gegenstandsoberfläche des Gegenstands aufgespannten Ebene angeordnet. Beispielsweise ist denkbar, dass die Schwenkachse geneigt zu zumindest einer Gegenstandsbegrenzungslinie des Gegenstands ausgerichtet ist. Beispielsweise schließt die Schwenkachse mit der Gegenstandsbegrenzungslinie, insbesondere mit der Gegenstandsschwenkachse, einen Winkel in einem Bereich von exklusive 0° bis exklusive 90° ein.lnsbesondere ist die Schwenkachse zumindest im Wesentlichen parallel zu der Gegenstandsbegrenzungslinie des Gegenstands ausgerichtet. Beispielsweise ist die Schwenkachse zumindest im Wesentlichen senkrecht zu der Gegenstandsschwenkachse ausgerichtet. Vorzugsweise ist die Schwenkachse in einem seitlichen Bereich des Verriegelungselements angeordnet. Unter einem "seitlichen Bereich" des Verriegelungselements soll insbesondere ein Bereich verstanden werden, der eine Begrenzungslinie des Verriegelungselements, insbesondere eine seitliche Begrenzungslinie des Verriegelungselements, ausbildet. Insbesondere ist der seitliche Bereich innerhalb einer von der seitlichen Begrenzungslinie und einer zumindest im Wesentlichen parallel zu der seitlichen Begrenzungslinie ausgerichteten Bereichsbegrenzungslinie angeordnet. Insbesondere beträgt eine Bereichshöhe weniger als 30 %, vorzugsweise weniger als 15 % und insbesondere weniger als 5 % eines Betrags einer Verriegelungselementenhöhe. Unter einer "Höhe" soll insbesondere eine zumindest im Wesentlichen senkrecht zu der Schwenkachse ausgerichtete Erstreckung des Elements verstanden werden. Unter einer "Verriegelungselementenhöhe" soll insbesondere eine zumindest im Wesentlichen senkrecht zu der Schwenkachse ausgerichtete Erstreckung des Verriegelungselements verstanden werden. Unter einer "Bereichshöhe" soll insbesondere eine zumindest im Wesentlichen senkrecht zu der Schwenkachse ausgerichtete Erstreckung des seitlichen Bereichs verstanden werden. Unter der Wendung, dass die Schwenkachse "zumindest im Wesentlichen in einer von der Gegenstandsoberfläche des Gegenstands aufgespannten Ebene angeordnet" ist, soll insbesondere verstanden werden, dass die Schwenkachse und die Ebene zumindest im Wesentlichen parallel ausgerichtet sind und einen Abstand von weniger als 1 cm, vorzugsweise von weniger als 0,5 cm und insbesondere von weniger als 0,1 cm aufweisen. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 90° abweicht. Unter der Wendung, dass ehe Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkelvon 0° abweicht. Durch eine erfindungsgemäße Ausgestaltung kann vorteilhaft das Verriegelungselement in einfacher, angenehmer Weise gelagert werden.

Zudem wird vorgeschlagen, dass die Schwenkachse in einem oberen Bereich des Verriegelungselements angeordnet ist. Alternativ könnte die Schwenkachse in einem seitlichen Bereich des Verriegelungselements angeordnet sein. Unter einem "oberen Bereich" des Verriegelungselements soll insbesondere ein Bereich verstanden werden, der in einer aufrechten Stellung einer Sitzeinheit, in welcher eine Rückenlehneneinheit der Sitzeinheit zumindest im Wesentlichen senkrecht zu einer Aufständerfläche der Sitzeinheit ausgerichtet ist, und in einer aufrechten Stellung des Verriegelungselements, in welcher eine Verriegelungselementenoberfläche des Verriegelungselements zumindest im Wesentlichen senkrecht zu der Aufständerfläche der Sitzeinheit ausgerichtet ist, als ein von der Aufständerfläche abgewandter Bereich ausgebildet ist. Insbesondere ist die Schwenkachse zumindest im Wesentlichen parallel zu der Gegenstandsschwenkachse ausgerichtet. Durch eine erfindungsgemäße Ausgestaltung kann vorteilhaft ein angenehm simpler Mechanismus bereitgestellt werden, dessen Handhabung einem Passagier bereits durch bekannte, vergleichbare Anwendungsfälle, wie beispielsweise bei einer Heckklappe eines Fahrzeugs, insbesondere eines Personenkraftwagens, geläufig ist.

Weiterhin wird vorgeschlagen, dass die Verriegelungseinheit zumindest eine Griffmulde umfasst, die eine Griffmuldenbreite von weniger als 20 cm aufweist. Insbesondere weist die Griffmuldenbreite einen Betrag von weniger als 20 cm, insbesondere von weniger als 15 cm und vorteilhaft von weniger als 12 cm auf. Insbesondere weist die Griffmuldenbreite einen Betrag von mehr als 2 cm auf. Vorteilhaft weist die Griffmuldenbreite einen Betrag auf, der größer ist als eine Breite eines Fingers einer Person, insbesondere eines Passagiers. Unter einer "Griffmulde" soll insbesondere eine Ausnehmung verstanden werden, die dazu vorgesehen ist, ein Hintergreifen eines Elements, insbesondere des Verriegelungselements, zu ermöglichen. Insbesondere ist die Griffmuldenbreite größer oder gleich einer Verriegelungselementenbreite des Verriegelungselements. Vorzugsweise weist die Griffmulde zumindest eine Griffmuldenhöhe von weniger als 15 cm, insbesondere von weniger als 12 cm und vorteilhaft von weniger als 9 cm auf. Insbesondere ist die Griffmuldenhöhe größer oder gleich der Verriegelungselementenhöhe des Verriegelungselements. Unter einer "Breite" soll insbesondere eine zumindest im Wesentlichen parallel zu der Schwenkachse ausgerichtete Erstreckung des Elements verstanden werden. Unter einer "Griffmuldenbreite" soll insbesondere eine zumindest im Wesentlichen parallel zu der Schwenkachse ausgerichtete Erstreckung der Griffmulde verstanden werden. Unter einer "Verriegelungselementenbreite" soll insbesondere eine zumindest im Wesentlichen parallel zu der Schwenkachse ausgerichtete Erstreckung des Verriegelungselements verstanden werden. Unter einer "Griffmuldenhöhe" soll insbesondere eine zumindest im Wesentlichen senkrecht zu der Schwenkachse ausgerichtete Erstreckung der Griffmulde verstanden werden. Durch eine erfindungsgemäße Ausgestaltung kann vorteilhaft eine Griffmulde mit einer geringen Griffmuldenbreite erreicht werden, wodurch ein durch eine zu groß ausgestaltete Griffmulde hervorgerufenes Verletzungsrisiko eines Passagiers, beispielsweise durch ein Verhaken von Kleidungsstücken in der zu groß ausgestalteten Griffmulde, verringert werden kann. Zudem kann eine in einem Vergleich zu einer zu großen Griffmuldenbreite angenehmere Handhabung erreicht werden.

Ferner wird vorgeschlagen, dass die Griffmulde eine freie Griffmuldenhöhe von weniger als 5 cm aufweist. Insbesondere weist die Griffmulde eine freie Griffmuldenoberfläche von weniger als 100 cm² auf. Unter einer "freien Griffmuldenhöhe" soll insbesondere ein zumindest im Wesentlichen senkrecht zu der Schwenkachse ausgerichteter, insbesondere kleinster, Abstand zwischen einer der Schwenkachse abgewandten Begrenzungslinie des Verriegelungselements und einer der Schwenkachse abgewandten Begrenzungslinie der Griffmulde verstanden werden. Unter einer "freien Griffmuldenoberfläche" soll insbesondere ein Produkt der freien Griffmuldenhöhe und der Griffmuldenbreite verstanden werden. Durch eine erfindungsgemäße Ausgestaltung kann vorteilhaft eine Griffmulde mit einer geringen freien Griffmuldenhöhe erreicht werden, wodurch ein durch eine zu groß ausgestaltete Griffmulde hervorgerufenes Verletzungsrisiko eines Passagiers, beispielsweise durch ein Verhaken von Kleidungsstücken in der zu groß ausgestalteten Griffmulde, verringert werden kann. Dadurch kann eine Sicherheit sowie ein Komfort für den Passagier erhöht werden.

Zudem wird vorgeschlagen, dass die Verriegelungseinheit dazu vorgesehen ist, bei Verriegelung des Gegenstands zumindest ein Verriegelungssignal auszugeben. Beispielsweise ist denkbar, dass das Verriegelungssignal als ein optisches Verriegelungssignal ausgebildet ist. Insbesondere ist das Verriegelungssignal als ein akustisches Verriegelungssignal ausgebildet. Vorzugsweise ist das Verriegelungssignal als ein haptisches Verriegelungssignal ausgebildet. Beispielsweise ist das akustische Verriegelungssignal als ein Ton ausgebildet. Insbesondere ist das akustische Verriegelungssignal als ein Klickgeräusch ausgebildet. Insbesondere ist das haptische Verriegelungssignal als ein Einrasten und/oder als ein Einschnappen des Verriegelungselements ausgebildet. Durch eine erfindungsgemäße Ausgestaltung kann vorteilhaft eine Verriegelung des Gegenstands in einfacher und angenehmer Weise kenntlich gemacht werden.

Weiterhin wird vorgeschlagen, dass das Verriegelungselement zumindest in einer Verriegelungsstellung bündig mit einer Gegenstandsoberfläche des Gegenstands angeordnet ist. Insbesondere ist das Verriegelungselement in der Verriegelungsstellung des Verriegelungselements bündig mit einer Gegenstandsoberfläche des Gegenstands angeordnet. Vorzugsweise ist das Verriegelungselement in der Verriegelungsstellung in der von der Gegenstandsoberfläche aufgespannten Ebene angeordnet. Insbesondere ist die freie Griffmuldenoberfläche in der Verriegelungsstellung des Verriegelungselements in der von der Gegenstandsoberfläche aufgespannten Ebene angeordnet. Vorzugsweise ist das Verriegelungselement in der Verriegelungsstellung kräftefrei gelagert. Unter der Wendung, dass das Verriegelungselement in der Verriegelungsstellung "in der von der Gegenstandsoberfläche aufgespannten Ebene angeordnet" ist, soll insbesondere verstanden werden, dass das Verriegelungselement zu mehr als 80 %, vorzugsweise zu mehr als 90 % und insbesondere zu mehr als 95 % eines Betrags einer Verriegelungselementenoberfläche in der von der Gegenstandsoberfläche aufgespannten Ebene angeordnet ist. Durch eine erfindungsgemäße Ausgestaltung kann vorteilhaft ein in der Verriegelungsstellung bündig mit der Gegenstandsoberfläche des Gegenstands angeordnetes und damit ein sicher gelagertes Verriegelungselement erreicht werden. Dadurch kann eine Funktion des Verriegelungselements dauerhaft gewährleistet werden, wodurch ein Passagier dauerhaft die Verriegelungseinheit komfortabel durch die Zugbetätigungseinheit betätigen kann. Weiterhin kann vorteilhaft ein optisch ansprechendes Design realisiert werden.

Ferner wird vorgeschlagen, dass die Verriegelungseinheit zumindest eine Rasteinheit aufweist, die dazu vorgesehen ist, den Gegenstand zu verrasten. Unter einer "Rasteinheit" soll insbesondere eine Einheit mit wenigstens einem Rastelement verstanden werden, das bei einem Befestigungsvorgang ausgelenkt wird, um anschließend durch eine Spannkraft hinter einem korrespondierenden Rastelement einzurasten. Durch eine erfindungsgemäße Ausgestaltung kann vorteilhaft der Gegenstand sicher in der Verstaustellung verrastet werden, wodurch ein Risiko eines Lösens des Gegenstands aus der Verstaustellung und damit eine Gefahr für einen Passagier verringert werden können. Dadurch können eine Zuverlässigkeit sowie ein Komfort für den Passagier erhöht werden. Weiterhin kann ein sicheres Einrasten und Fixieren des Gegenstands in mehreren Richtungen, insbesondere in einer zumindest im Wesentlichen parallel sowie in einer zumindest im Wesentlichen senkrecht zu der Schwenkachse ausgerichteten Richtung, erreicht werden.

Zudem wird vorgeschlagen, dass die Verriegelungseinheit eine Rückstelleinheit aufweist, die dazu vorgesehen ist, das Verriegelungselement automatisch in eine Ausgangslage zurückzubewegen. Insbesondere ist die Rückstelleinheit als ein Federelement ausgebildet. Vorzugsweise ist das Federelement als eine Zugfeder ausgebildet. Insbesondere ist das Federelement als eine Spiralfeder ausgebildet. Vorzugsweise ist das Federelement als eine Blattfeder ausgebildet. Insbesondere ist die Ausgangslage des Verriegelungselements als die Verriegelungsstellung des Verriegelungselements ausgebildet. Durch eine erfindungsgemäße Ausgestaltung kann vorteilhaft das Verriegelungselement automatisch in die Ausgangslage zurückbewegt werden, wodurch einem Passagier eine Arbeit eines Zurückbewegens des Verriegelungselements in die Ausgangslage komfortabel erspart werden kann.

Weiterhin wird vorgeschlagen, dass die Verriegelungseinheit zumindest einen Auslösemechanismus aufweist, der dazu vorgesehen ist, das Verriegelungselement bei zumindest einer Bewegung des Gegenstands auszulenken. Insbesondere ist der Auslösemechanismus dazu vorgesehen, das Verriegelungselement bei einer Bewegung des Gegenstands, insbesondere ausgehend von einer Gebrauchsstellung, in die Verstaustellung auszulenken. Vorzugsweise weist der Auslösemechanismus zumindest ein Führungselement auf, das dazu vorgesehen ist, ein mit dem Verriegelungselement verbundenes weiteres Führungselement bei der Bewegung des Gegenstands auszulenken. Insbesondere ist der Auslösemechanismus, insbesondere das Führungselement des Auslösemechanismus, dazu vorgesehen, das Verriegelungselement, insbesondere das mit dem Verriegelungselement verbundene weitere Führungselement, um die Schwenkachse zu verschwenken. Vorzugsweise ist das weitere Führungselement fest mit dem Verriegelungselement verbunden. Insbesondere ist das weitere Führungselement steif mit dem Verriegelungselement verbunden. Durch eine erfindungsgemäße Ausgestaltung kann vorteilhaft das Verriegelungselement bei der Bewegung des Gegenstands selbsttätig ausgelenkt werden, wodurch ein Passagier den Gegenstand problemlos, insbesondere unter Vermeidung von Hindernissen, bewegen kann. Dadurch kann eine bequeme Handhabung des Gegenstands erreicht werden.

Ferner wird vorgeschlagen, dass die Verriegelungseinheit dazu vorgesehen ist, den Gegenstand in der Verstaustellung an einer Sitzeinheit zu verriegeln. Insbesondere ist die Verriegelungseinheit dazu vorgesehen, den Gegenstand in der Verstaustellung an einer Rückenlehneneinheit der Sitzeinheit zu verriegeln. Vorzugsweise ist die Schwenkachse zumindest im Wesentlichen parallel zu einer Sitzbodeneinheit der Sitzeinheit ausgerichtet. Insbesondere ist die Schwenkachse zumindest im Wesentlichen parallel zu einer Rückenlehneneinheit der Sitzeinheit ausgerichtet. Vorzugsweise ist der Gegenstand schwenkbar an der Rückenlehneneinheit der Sitzeinheit gelagert. Insbesondere ist der Gegenstand um die Gegenstandsschwenkachse schwenkbar an der Rückenlehneneinheit der Sitzeinheit gelagert. Durch eine erfindungsgemäße Ausgestaltung kann vorteilhaft der Gegenstand in einer für einen Passagier gewohnten Stellung an der Sitzeinheit, insbesondere an der Rückenlehneneinheit der Sitzeinheit, verriegelt werden, wodurch dem Passagier eine für den Passagier bekannte und damit komfortable Verstaustellung des Gegenstands bereitgestellt werden kann.

Zudem wird vorgeschlagen, dass die Bewegungskomponente in dem Bewegungsabschnitt geneigt zu einer Gegenstandsoberfläche des Gegenstands ausgerichtet ist. Insbesondere ist die Bewegungskomponente als eine Hauptbewegungskomponente ausgebildet. Vorzugsweise weist die Bewegungskomponente einen Betrag von mehr als 70 %, vorzugsweise von mehr als 80 % und insbesondere von mehr als 90 % eines Betrags der Zugbewegung auf. Unter der Wendung, dass die Bewegungskomponente in dem Bewegungsabschnitt "geneigt" zu der Gegenstandsoberfläche des Gegenstands ausgerichtet ist, soll insbesondere verstanden werden, dass in dem Bewegungsabschnitt die Bewegungskomponente mit der Gegenstandsoberfläche des Gegenstands einen kleinsten Winkel in einem Bereich von ausschließlich 0° und enschließlich 90° einschließt. Insbesondere schließt in dem Bewegungsabschnitt die Bewegungskomponente mit der Gegenstandsoberfläche des Gegenstands einen kleinsten Winkel in einem Bereich von einschließlich 70° und einschließlich 90° ein. Unter einem "kleinsten Winkel" soll insbesondere ein Winkel bei einem Schnitt zweier Geraden und/oder Ebenen verstanden werden, der einen Betrag aufweist, der kleiner oder gleich einem Betrag eines größten Winkels bei dem Schnitt der beiden Geraden und/oder Ebenen ist. Insbesondere beträgt eine Summe des kleinsten Winkels und des größten Winkels zumindest im Wesentlichen 180°. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Durch eine erfindungsgemäße Ausgestaltung kann vorteilhaft der Gegenstand von einem sitzenden Passagier bequem, einfach, sicher und schnell bewegt werden.

Weiterhin wird vorgeschlagen, dass die Fahrzeugsitzverriegelungsvorrichtung zumindest eine Lagereinheit aufweist, die dazu vorgesehen ist, den Gegenstand schwenkbar zu lagern. Insbesondere weist die Lagereinheit zumindest eine Gegenstandsschwenkachse auf, um welche der Gegenstand schwenkbar gelagert ist. Insbesondere ist die Gegenstandsschwenkachse als eine ortsfeste Schwenkachse ausgebildet. Vorteilhaft ist die Gegenstandsschwenkachse ortsfest an der Sitzeinheit, insbesondere an der Rückenlehneneinheit, angeordnet. Vorteilhaft ist der Gegenstand mittels der Gegenstandsschwenkachse an einer Seite des Gegenstands fest an der Sitzeinheit, insbesondere der Rückenlehneneinheit, angeordnet. Insbesondere ist der Gegenstand schwenkbar um die ortsfeste Gegenstandsschwenkachse an der Sitzeinheit angeordnet. Insbesondere ist der Gegenstand bei einer Bewegung von der Verstaustellung in die Gebrauchsstellung mittels der ortsfesten Gegenstandsschwenkachse an der Sitzeinheit angeordnet. Insbesondere ist der Gegenstand dazu vorgesehen, bei einer Bewegung von der Verstaustellung in die Gebrauchsstellung nicht angehoben zu werden. Alternativ ist denkbar, dass die Lagereinheit zumindest ein Trägerelement, insbesondere zumindest zwei Trägerelemente, aufweist, das um zumindest eine Schwenkachse schwenkbar an der Sitzeinheit angebracht ist, wobei der Gegenstand um zumindest eine weitere Schwenkachse schwenkbar an dem Trägerelement angebracht ist. Durch eine erfindungsgemäße Ausgestaltung kann vorteilhaft der Gegenstand in einer bekannten, einem Passagier vertrauten Weise gelagert werden, wodurch der Passagier einfach und angenehm den Gegenstand bewegen kann.

Ferner wird vorgeschlagen, dass die Bewegungskomponente der Zugbewegung in dem Bewegungsabschnitt zumindest im Wesentlichen in Richtung einer Schwenkrichtung des Gegenstands ausgerichtet ist. Insbesondere ist die Bewegungskomponente der Zugbewegung in dem Bewegungsabschnitt zumindest im Wesentlichen in Richtung einer Tangente an die Schwenkrichtung des Gegenstands ausgerichtet. Vorzugsweise ist die Bewegungskomponente der Zugbewegung in dem Bewegungsabschnitt zumindest im Wesentlichen parallel zu der Schwenkrichtung, insbesondere zu der Tangente an die Schwenkrichtung, des Gegenstands ausgerichtet. Insbesondere ist die Bewegungsrichtung des Gegenstands als die Schwenkrichtung des Gegenstands ausgebildet. Unter einer "Schwenkrichtung" soll insbesondere eine Richtung verstanden werden, in welcher sich zumindest ein der Gegenstandsschwenkachse abweisender Endbereich des Gegenstands bei einer Bewegung, insbesondere Schwenkbewegung, des Gegenstands bewegt. Insbesondere bewegt sich der Gegenstand, insbesondere der Endbereich des Gegenstands, bei der Bewegung zumindest im Wesentlichen auf einer Bogenbahn, insbesondere Kreisbahn. Durch eine erfindungsgemäße Ausgestaltung können vorteilhaft die Zugbewegung an dem Verriegelungselement und die Schwenkrichtung des Gegenstands in harmonischer, angenehmer Weise miteinander verbunden werden.

Weiterhin wird ein Flugzeugsitz mit zumindest einer Sitzeinheit und mit zumindest einer erfindungsgemäßen Fahrzeugsitzverriegelungsvorrichtung vorgeschlagen. Insbesondere ist die Sitzeinheit, vorteilhaft der Flugzeugsitz, als ein Economy-Class-Sitz ausgebildet. Durch eine erfindungsgemäße Ausgestaltung kann vorteilhaft ein Flugzeugsitz mit einer Sitzeinheit bereitgestellt werden, wodurch ein Passagier es sich angenehm in der Sitzeinheit bequem machen kann. Zudem kann der Flugzeugsitz mit der erfindungsgemäßen Fahrzeugsitzverriegelungsvorrichtung ausgestattet werden, wodurch ein Komfort für den Passagier weiter erhöht werden kann.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Flugzeugsitz mit einer erfindungsgemäßen Fahrzeugsitzverriegelungsvorrichtung in einer perspektivischen Darstellung,
- Fig. 2: eine schematische Darstellung eines Ausschnitts der erfindungsgemäßen Fahrzeugsitzverriegelungsvorrichtung aus Fig. 1.,
- Fig. 3: eine schematische Darstellung eines Ausschnitts einer alternativen Ausgestaltung einer erfindungsgemäßen Fahrzeugsitzverriegelungsvorrichtung und
- Fig. 4: eine schematische Darstellung eines Ausschnitts einer alternativen Ausgestaltung einer erfindungsgemäßen Fahrzeugsitzverriegelungsvorrichtung.

### Beschreibung des Ausführungsbeispiels

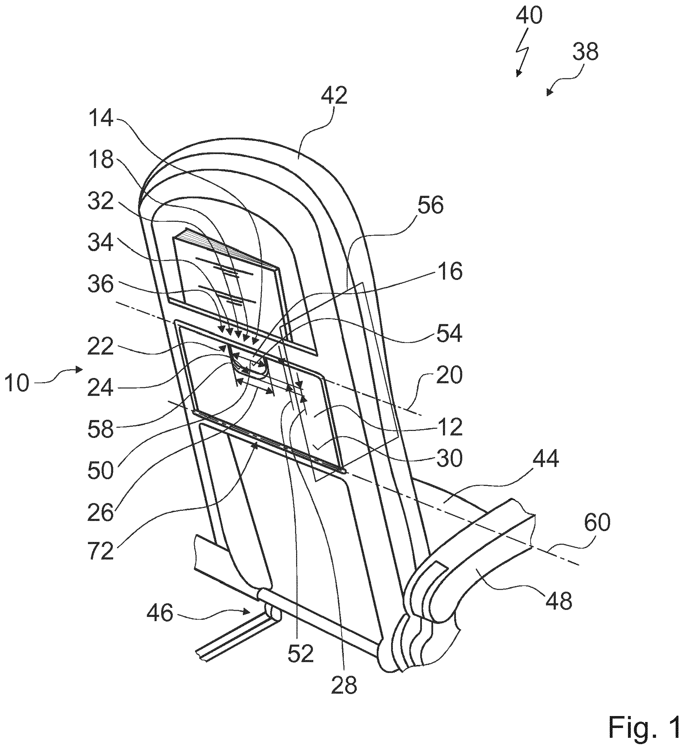

Fig. 1 zeigt einen erfindungsgemäßen Flugzeugsitz 40 mit einer Sitzeinheit 38 und mit einer erfindungsgemäßen Fahrzeugsitzverriegelungsvorrichtung 10 in einer perspektivischen Darstellung, wobei die Sitzeinheit 38 in einer aufrechten Position der Sitzeinheit 38 angeordnet ist. Die Fahrzeugsitzverriegelungsvorrichtung 10 ist als eine Flugzeugsitzverriegelungsvorrichtung ausgebildet. Die Sitzeinheit 38 weist eine Rückenlehneneinheit 42 auf, die zu einem Anlehnen eines Rückens eines Passagiers (nicht dargestellt) vorgesehen ist. Zudem weist die Sitzeinheit 38 eine Sitzbodeneinheit 44 auf, die als eine Sitzfläche für den Passagier ausgebildet ist. Die Rückenlehneneinheit 42 ist schwenkbar an der Sitzbodeneinheit 44 gelagert. Die Sitzeinheit 38 weist eine Aufständereinheit 46 auf, mittels welcher die Sitzeinheit 38 auf einer Aufständerfläche aufgeständert ist. Die Aufständerfläche ist als ein Kabinenboden ausgebildet. Weiterhin weist die Sitzeinheit 38 eine Armlehneneinheit 48 auf, die schwenkbar an einem Sitzteiler der Aufständereinheit 46 gelagert ist.

Ausgestattet ist die Fahrzeugsitzverriegelungsvorrichtung 10, und zwar die Flugzeugsitzverriegelungsvorrichtung, mit einem Gegenstand 12, und zwar einem Tisch, und mit einer Verriegelungseinheit 14, die ein Verriegelungselement 16 aufweist und dazu vorgesehen ist, den Gegenstand 12 in einer Verstaustellung zu verriegeln. Fig. 1 zeigt den Gegenstand 12 in der Verstaustellung. Das Verriegelungselement 16 ist in einer Verriegelungsstellung angeordnet. In der Verstaustellung des Gegenstands 12 ist das Verriegelungselement 16 stets in der Verriegelungsstellung angeordnet. Im vorliegenden Ausführungsbeispiel ist die Verriegelungseinheit 14 dazu vorgesehen, den Gegenstand 12 in der Verstaustellung an der Sitzeinheit 38 zu verriegeln. Wie Fig. 1 zu entnehmen, ist die Verriegelungseinheit 14 dazu vorgesehen, den Gegenstand 12 in der Verstaustellung an der Rückenlehneneinheit 42 der Sitzeinheit 38 zu verriegeln. Der Gegenstand 12 ist schwenkbar an der Rückenlehneneinheit 42 gelagert.

Um den Gegenstand 12 ausgehend von der Verstaustellung in eine Gebrauchsstellung (nicht dargestellt) zu bewegen, muss die Verriegelungseinheit 14 betätigt werden. Und zwar muss die Verriegelungseinheit 14 entriegelt werden. Die Verriegelungseinheit 14 weist eine Zugbetätigungseinheit 18 auf, die dazu vorgesehen ist, durch eine Zugbewegung an dem Verriegelungselement 16 betätigbar zu sein, die in einem Bewegungsabschnitt eine Bewegungskomponente in Bewegungsrichtung des Gegenstands 12 aufweist. Im vorliegenden Ausführungsbeispiel ist die Zugbetätigungseinheit 18 als eine Zugentriegelungseinheit ausgebildet. Die Verriegelungseinheit 14 ist durch die Zugbewegung an dem Verriegelungselement 16 entriegelbar. Beispielsweise ist denkbar, dass das Verriegelungselement 16 an der Rückenlehneneinheit 42 oberhalb des Gegenstands 12 oder seitlich neben dem Gegenstand 12 angeordnet ist. Im vorliegenden Ausführungsbeispiel ist das Verriegelungselement 16 an dem Gegenstand 12 angeordnet. Das Verriegelungselement 16 ist in der Verriegelungsstellung bündig mit einer Gegenstandsoberfläche 30 des Gegenstands 12 angeordnet. Dadurch kann ein optisch anspruchsvolles Design realisiert sowie eine Zuverlässigkeit erhöht werden.

Ausgestattet ist die Fahrzeugsitzverriegelungsvorrichtung 10 mit einer Lagereinheit 72, die dazu vorgesehen ist, den Gegenstand 12 schwenkbar zu lagern. Und zwar ist die Lagereinheit 72 dazu vorgesehen, den Gegenstand 12 schwenkbar an der Rückenlehneneinheit 42 zu lagern. Die Lagereinheit 72 weist eine Gegenstandsschwenkachse 60 auf, um welche der Gegenstand 12 schwenkbar gelagert ist. Der Gegenstand 12 ist schwenkbar um die Gegenstandsschwenkachse 60 an der Rückenlehneneinheit 42 gelagert. Die Gegenstandsschwenkachse 60 ist als eine untere Schwenkachse ausgebildet. Die Gegenstandsschwenkachse 60 ist in einem der Aufständereinheit 46 zugewandten Endbereich des Gegenstands 12 angeordnet. Der Gegenstand 12 durchläuft bei der Bewegung des Gegenstands 12 eine Schwenkbewegung um die Gegenstandsschwenkachse 60. Die Bewegung des Gegenstands 12 ist durch die Zugbewegung auslösbar, welche geneigt zu der Gegenstandsoberfläche 30 des Gegenstands 12 ausgerichtet ist. Und zwar ist die Bewegungskomponente in dem Bewegungsabschnitt geneigt zu einer Gegenstandsoberfläche 30 des Gegenstands 12 ausgerichtet. Zudem ist die Bewegungskomponente der Zugbewegung in dem Bewegungsabschnitt im Wesentlichen in Richtung der Schwenkrichtung des Gegenstands 12 ausgerichtet. Und zwar ist die Bewegungsrichtung des Gegenstands 12 als die Schwenkrichtung des Gegenstands 12 ausgebildet.

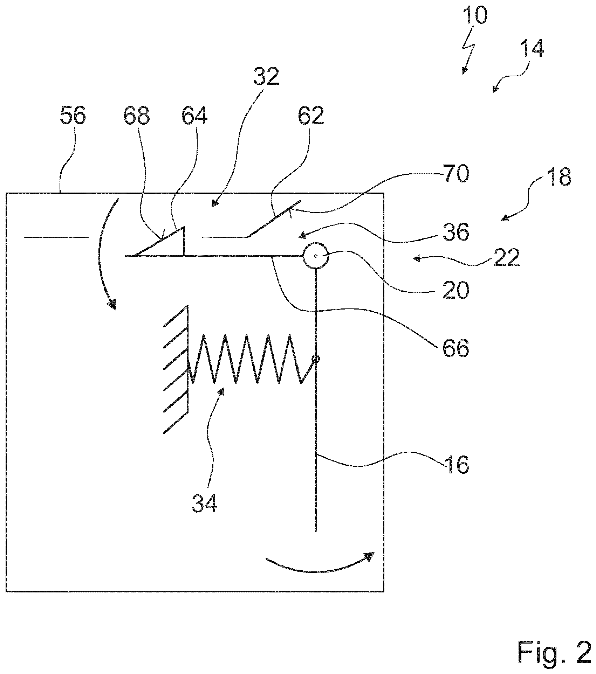

Die Verriegelungseinheit 14 weist eine Schwenkachse 20 auf, um die das Verriegelungselement 16 schwenkbar gelagert ist. Das Verriegelungselement 16 ist in einer senkrecht zu der Gegenstandsoberfläche 30 des Gegenstands 12 ausgerichteten Schwenkebene 56 schwenkbar gelagert (vgl. Fig. 2). Der Gegenstand 12 ist in der senkrecht zu der Gegenstandsoberfläche 30 des Gegenstands 12 ausgerichteten Schwenkebene 56 schwenkbar gelagert. Die Schwenkachse 20 ist in einer von der Gegenstandsoberfläche 30 aufgespannten Ebene angeordnet. Demnach ist die Schwenkachse 20 parallel zu dem Gegenstand 12 ausgerichtet. Weiterhin ist die Schwenkachse 20 parallel zu der Rückenlehneneinheit 42 der Sitzeinheit 38 ausgerichtet. Zudem ist die Schwenkachse 20 parallel zu der Sitzbodeneinheit 44 der Sitzeinheit 38 ausgerichtet. Wie aus Fig. 1 hervorgeht, ist die Schwenkachse 20 in einem oberen Bereich 22 des Verriegelungselements 16 angeordnet. Der obere Bereich 22 ist in der aufrechten Position der Sitzeinheit 38 als ein der Sitzbodeneinheit 44 abgewandter Bereich ausgebildet. Zudem ist der obere Bereich 22 in der aufrechten Position der Sitzeinheit 38 als ein der Aufständereinheit 46 abgewandter Bereich ausgebildet.

Das Verriegelungselement 16 weist eine Verriegelungselementenbreite 50 auf, die parallel zu der Schwenkachse 20 ausgerichtet ist. Die Verriegelungselementenbreite 50 weist einen Betrag von 8 cm auf. Zudem weist das Verriegelungselement 16 eine Verriegelungs-elementenhöhe 52 auf, die senkrecht zu der Schwenkachse 20 ausgerichtet ist. Die Verriegelungselementenhöhe 52 weist einen Betrag von 5 cm auf. Das Verriegelungselement 16 weist eine Verriegelungselementenoberfläche 54 auf, die im Wesentlichen als ein Produkt aus der Verriegelungselementenbreite 50 und der Verriegelungselementenhöhe 52 ausgebildet ist. Die Verriegelungselementenoberfläche 54 weist eine Form eines Rechtecks mit abgerundeten Ecken auf. Die Verriegelungselementenoberfläche 54 ist in der von der Gegenstandsoberfläche 30 des Gegenstands 12 aufgespannten Ebene angeordnet. Die Verriegelungselementenoberfläche 54 weist einen Betrag von 40 cm² auf. Durch eine derartige Ausgestaltung kann vorteilhaft eine im Vergleich zu einem als ein Knebel oder Haken ausgebildeten Verriegelungselement günstigere Belastung durch eine größere Auflagefläche erreicht werden.

Die Verriegelungseinheit 14 umfasst eine Griffmulde 24, die eine Griffmuldenbreite 26 von weniger als 20 cm aufweist. Im vorliegenden Ausführungsbeispiel weist die Griffmuldenbreite 26 einen Betrag von 8,5 cm auf. Demnach ist die Griffmuldenbreite 26 im Wesentlichen gleich der Verriegelungselementenbreite 50 des Verriegelungselements 16. Die Griffmuldenbreite 26 ist parallel zu der Schwenkachse 20 ausgerichtet. Die Griffmulde 24 weist eine freie Griffmuldenhöhe 28 von weniger als 5 cm auf. Im vorliegenden Ausführungsbeispiel weist die freie Griffmuldenhöhe 28 einen Betrag von 2 cm auf. Die freie Griffmuldenhöhe 28 ist senkrecht zu der Schwenkachse 20 ausgerichtet. Weiterhin ist die freie Griffmuldenhöhe 28 parallel zu der Verriegelungselementenhöhe 52 des Verriegelungselements 16 ausgerichtet. Die Griffmulde 24 weist eine freie Griffmuldenoberfläche 58 auf, die als ein Produkt aus der freien Griffmuldenhöhe 28 und der Griffmuldenbreite 26 ausgebildet ist. Die freie Griffmuldenoberfläche 58 weist einen Betrag von weniger als 100 cm² auf. Im vorliegenden Ausführungsbeispiel weist die freie Griffmuldenoberfläche 58 einen Betrag von 17 cm² auf. Analog zu der freien Griffmuldenhöhe 28 und der Griffmuldenbreite 26 ist die freie Griffmuldenoberfläche 58 in der von der Gegenstandsoberfläche 30 des Gegenstands 12 aufgespannten Ebene angeordnet. Die freie Griffmuldenoberfläche 58 weist eine Form eines Rechtecks mit abgerundeten Ecken auf.

Wie bereits erwähnt, muss die die Verriegelungseinheit 14 entriegelt werden, um den Gegenstand 12 ausgehend von der Verstaustellung in die Gebrauchsstellung zu bewegen. Die Verriegelungseinheit 14 ist durch die Zugbewegung an dem Verriegelungselement 16 betätigbar. Durch Aufrechterhaltung der Zugbewegung an dem Verriegelungselement 16 schwenkt der Gegenstand 12 um die Gegenstandsschwenkachse 60 in die Gebrauchsstellung. Das Verriegelungselement 16 ist als ein Griff ausgebildet. Durch eine derartige Ausgestaltung kann eine Entriegelung der Verriegelungseinheit 14 und ein Bewegen des Gegenstands 12 in die Gebrauchsstellung mittels einer einzigen Handbewegung erfolgen, wodurch vorteilhaft ein Komfort für den Passagier erhöht werden kann.

Spätestens nachdem der Gegenstand 12 in der Gebrauchsstellung angeordnet ist, lässt der Passagier das Verriegelungselement 16 los. Dies geschieht normalerweise in einer Auslenkstellung des Verriegelungselements 16. In der Auslenkstellung ist das Verriegelungselement 16 größtenteils außerhalb der von der Gegenstandsoberfläche 30 aufgespannten Ebene angeordnet. Lediglich der obere Bereich 22 um die Schwenkachse 20 ist teilweise innerhalb der von der Gegenstandsoberfläche 30 aufgespannten Ebene angeordnet. Diese Stellung stellt für den Passagier eine potentielle Gefahrenquelle dar, da ein Risiko eines Verhakens von Kleidung des Passagiers und/oder eines Anschlagens von Körperteilen des Passagiers erhöht ist. Die Verriegelungseinheit 14 weist eine Rückstelleinheit 34 auf, die dazu vorgesehen ist, das Verriegelungselement 16 automatisch in eine Ausgangslage zurückzubewegen (vgl. Fig. 2). Im vorliegenden Ausführungsbeispiel ist die Ausgangslage als die Verriegelungsstellung des Verriegelungselements 16 ausgebildet. Die Rückstelleinheit 34 ist als ein Federelement ausgebildet. Beispielsweise ist denkbar, dass die Rückstelleinheit 34 als eine Blattfeder ausgebildet ist. Ebenfalls denkbar ist, dass die Rückstelleinheit 34 als eine Spiralfeder ausgebildet ist. Im vorliegenden Ausführungsbeispiel ist die Rückstelleinheit 34 als eine Zugfeder ausgebildet. Bei Betätigung der Verriegelungseinheit 14 durch die Zugbewegung an dem Verriegelungselement 16 ist die als Federelement ausgebildete Rückstelleinheit 34 ausgelenkt. Das Verriegelungselement 16 ist durch die Zugbewegung an dem Verriegelungselement 16 um die Schwenkachse 20 verschwenkt. Nach Loslassen des Verriegelungselements 16 bewegt die Rückstelleinheit 34 durch eine interne Zugkraft das Verriegelungselement 16 zurück in die Ausgangslage. Dabei schwenkt die Rückstelleinheit 34 das Verriegelungselement 16 um die Schwenkachse 20 zurück in die Ausgangslage. Unter Abwesenheit äußerer Kräfte ist das Verriegelungselement 16 stets in der von der Gegenstandsoberfläche 30 aufgespannten Ebene angeordnet.

Fig. 2 zeigt eine schematische Darstellung eines Ausschnitts der erfindungsgemäßen Fahrzeugsitzverriegelungsvorrichtung 10. Die Verriegelungseinheit 14 weist eine Rasteinheit 32 auf, die dazu vorgesehen ist, den Gegenstand 12 zu verrasten. Und zwar ist die Rasteinheit 32 dazu vorgesehen, den Gegenstand 12 in der Verstaustellung zu verrasten. Die Rasteinheit 32 weist zwei Rastelemente 62, 64 auf, die dazu vorgesehen sind, durch eine Kopplung den Gegenstand 12 zu verrasten. Das Rastelement 62 ist an der Rückenlehneneinheit 42 der Sitzeinheit 38 angeordnet. Die Verriegelungseinheit 14 weist einen Verriegelungselementhebel 66 auf, der mit dem Verriegelungselement 16 an der Schwenkachse 20 verbunden ist. Im vorliegenden Ausführungsbeispiel sind das Verriegelungselement 16 und der Verriegelungselementhebel 66 aus einem Stück geformt. An einem der Schwenkachse 20 abgewandten Ende des Verriegelungselementhebels 66 ist das Rastelement 64 fest an dem Verriegelungselementhebel 66 angebracht. Im vorliegenden Ausführungsbeispiel sind der Verriegelungselementhebel 66 und das Rastelement 64 aus einem Stück geformt. Das Rastelement 62 ist dazu vorgesehen, in der Verstaustellung des Gegenstands 12 mit dem Rastelement 64 zu verrasten. Und zwar hintergreift das Rastelement 64 in der Verstaustellung des Gegenstands 12 das Rastelement 62.

Der Gegenstand 12 ist ausgehend von der Gebrauchsstellung durch eine Druckbewegung in die Verstaustellung bringbar. Bei Anwendung einer Druckkraft auf die Gegenstandsoberfläche 30 schwenkt der Gegenstand 12 um die Gegenstandsschwenkachse 60. Die Verriegelungseinheit 14 weist einen Auslösemechanismus 36 auf, der dazu vorgesehen ist, das Verriegelungselement 16 bei einer Bewegung des Gegenstands 12 auszulenken. Im vorliegenden Ausführungsbeispiel ist der Auslösemechanismus 36 einstückig mit der Rasteinheit 32 ausgebildet. Im Folgenden soll der Auslösemechanismus 36 beschrieben werden. Das Rastelement 64 weist in einer parallel zu der Schwenkebene 56 ausgerichteten Querschnittsebene eine Form eines rechtwinkligen Dreiecks auf. Zudem weist das Rastelement 64 eine Gleitfläche 68 auf. Analog hierzu weist das Rastelement 62 eine korrespondierende Gleitfläche 70 auf. Die Rastelemente 62, 64 sind dazu vorgesehen, durch eine Gleitbewegung der Gleitflächen 68, 70 das Verriegelungselement 16 bei der Bewegung des Gegenstands 12 auszulenken. Das Rastelement 62 ist als ein Führungselement ausgebildet. Das Rastelement 64 ist als ein weiteres Führungselement ausgebildet. Bei Bewegung des Gegenstands 12 ausgehend von der Gebrauchsstellung in die Verstaustellung kommt die Gleitfläche 68 des Rastelements 64 mit der Gleitfläche 70 des Rastelements 62 in Anlage. Wie bereits erwähnt, ist das Rastelement 64 mit dem Verriegelungselement 16 schwenkbar um die Schwenkachse 20 durch den Verriegelungselementhebel 66 verbunden. Aufgrund der schwenkbaren Verbindung des Rastelements 64 mit dem Verriegelungselement 16 ist das Verriegelungselement 16 auslenkbar. Bei Überschreiten einer vorgegebenen Spannkraft der Rückstelleinheit 34 durch die Druckkraft der Druckbewegung lenkt der Auslösemechanismus 36 das Verriegelungselement 16 aus. Dadurch kann vorteilhaft eine harmonische Bewegung des Gegenstands 12 in die Verstaustellung erreicht werden. Zudem kann dem Passagier eine Arbeit durch eine manuelle Auslenkung des Verriegelungselements 16 komfortablerweise abgenommen werden.

Bei weiterer Anwendung der Druckkraft durch die Druckbewegung verrastet die Rasteinheit 32. Und zwar verrasten die Rastelemente 62, 64 der Rasteinheit 32. Dadurch verriegelt der Gegenstand 12 in der Verstaustellung. Die Verriegelungseinheit 14 ist dazu vorgesehen, bei Verriegelung des Gegenstands 12 ein Verriegelungssignal auszugeben. Im vorliegenden Ausführungsbeispiel ist das Verriegelungssignal als ein Klickgeräusch ausgebildet. Das Verriegelungssignal entsteht durch das Verrasten der Rasteinheit 32. Demnach ist die Verriegelungseinheit 14 dazu vorgesehen, bei Verriegelung des Gegenstands 12 ein akustisches Verriegelungssignal auszugeben. Zudem ist das Verriegelungssignal als ein haptisches Verriegelungssignal ausgebildet. Hat der Passagier seine Hand während der Druckbewegung an dem Verriegelungselement 16, so ist das Einrasten der Rasteinheit 32 als ein Einschnappen des Verriegelungselements 16 in die Verriegelungsstellung fühlbar.

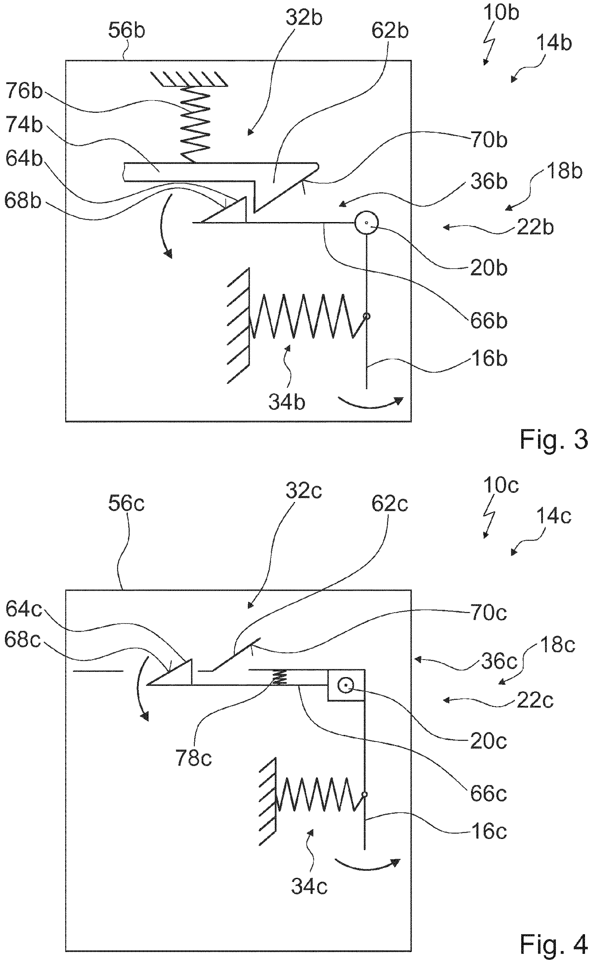

In den Fig. 3 und 4 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Fig. 1 und 2, verwiesen werden kann. Zur Unterscheidung der Ausführungsbeispiele ist den Bezugszeichen des Ausführungsbeispiels in den Fig. 1 und 2 jeweils der Buchstabe b und c in den Bezugszeichen der Ausführungsbeispiele der Fig. 3 und 4 ergänzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Fig. 1 und 2, verwiesen werden.

Fig. 3 zeigt eine schematische Darstellung eines Ausschnitts einer alternativen Ausgestaltung einer erfindungsgemäßen Fahrzeugsitzverriegelungsvorrichtung 10b. Die Fahrzeugsitzverriegelungsvorrichtung 10b unterscheidet sich von der Fahrzeugsitzverriegelungsvorrichtung 10 des Ausführungsbeispiels der Fig. 1 und 2 durch eine Ausgestaltung einer jeweiligen Rasteinheit. Eine Rasteinheit 32b weist zwei Rastelemente 62b, 64b auf, die dazu vorgesehen sind, durch eine Kopplung einen Gegenstand 12b zu verrasten. Zudem umfasst die Rasteinheit 32b einen Rasthebel 74b, an welchem das Rastelement 62b angeordnet ist. Der Rasthebel 74b ist an einer Rückenlehneneinheit 42b einer Sitzeinheit 38b angeordnet. Der Rasthebel 74b ist mittels einem Rasthebelfederelement 76b an der Rückenlehneneinheit 42b abgestützt. Bei einer Bewegung des Gegenstands 12b ist der Rasthebel 74b dazu vorgesehen, entgegen einer von dem Rasthebelfederelement 76b erzeugten Kraft ausgelenkt zu werden. Das Rasthebelfederelement 76b ist dazu vorgesehen, mittels der von dem Rasthebelfederelement 76b erzeugten Kraft eine Rückbewegung des Rasthebels 74b in eine Ausgangsstellung zu ermöglichen. Der Rasthebel 74b weist an einem der Rückenlehneneinheit 42b abweisenden Ende das Rastelement 62b auf. Das Rastelement 62b weist eine keilförmige Gestalt mit einer Gleitfläche 70b auf. Eine Ausgestaltung eines Verriegelungselementhebels 66b ist identisch zu einer Ausgestaltung des Verriegelungselementhebels 66 des Ausführungsbeispiels der Fig. 1 und 2. Das Rastelement 62b ist dazu vorgesehen, in einer Verstaustellung eines Gegenstands 12b mit einem Rastelement 64b des Verriegelungselementhebels 66b zu verrasten. Hierbei hintergreift das Rastelement 64b in der Verstaustellung des Gegenstands 12b das Rastelement 62b. Die Rastelemente 62b, 64b sind dazu vorgesehen, durch eine Gleitbewegung der Gleitflächen 68b, 70b das Verriegelungselement 16b bei der Bewegung des Gegenstands 12b auszulenken.

Fig. 4 zeigt eine schematische Darstellung eines Ausschnitts einer alternativen Ausgestaltung einer erfindungsgemäßen Fahrzeugsitzverriegelungsvorrichtung 10c. Das Ausführungsbeispiel der Fig. 4 unterscheidet sich von dem Ausführungsbeispiel der Fig. 2 in einer Anordnung eines Verriegelungselements und eines Verriegelungselementhebels relativ zueinander. Eine Verriegelungseinheit 14c weist einen Verriegelungselementhebel 66c auf, der mit einem Verriegelungselement 16c an einer Schwenkachse 20c verbunden ist. Der Verriegelungselementhebel 66c ist mittels eines Verriegelungsfederelements 78c mit dem Verriegelungselement 16c verbunden. In Fig. 4 ist dies schematisch anhand eines L-förmig ausgebildeten Verriegelungselements 16c dargestellt. Beispielsweise sind das Verriegelungselement 16c und der Verriegelungselementhebel 66c mittels eines die Schwenkachse 20c ausbildenden Verbindungsbolzens miteinander verbunden. Hierbei ist das Verriegelungsfederelement 78c als eine sowohl an dem Verriegelungselement 16c als auch an dem Verriegelungselementhebel 66c abgestützte Spiralfeder ausgebildet. Alternativ sind andere, einem Fachmann als sinnvoll erscheinende Anordnungen des Verriegelungselementhebels 66c, des Verriegelungsfederelements 78c und des Verriegelungselements 16c denkbar. Eine Funktionsweise der Verriegelungseinheit 14c ist analog zu einer Funktionsweise der Verriegelungseinheit 14a des Ausführungsbeispiels der Fig. 1.

### Bezugszeichen

- 10: Fahrzeugsitzverriegelungsvorrichtung
- 12: Gegenstand
- 14: Verriegelungseinheit
- 16: Verriegelungselement
- 18: Zugbetätigungseinheit
- 20: Schwenkachse
- 22: Oberer Bereich
- 24: Griffmulde
- 26: Griffmuldenbreite
- 28: Freie Griffmuldenhöhe
- 30: Gegenstandsoberfläche
- 32: Rasteinheit
- 34: Rückstelleinheit
- 36: Auslösemechanismus
- 38: Sitzeinheit
- 40: Flugzeugsitz
- 42: Rückenlehneneinheit
- 44: Sitzbodeneinheit
- 46: Aufständereinheit
- 48: Armlehneneinheit
- 50: Verriegelungselementenbreite
- 52: Verriegelungselementenhöhe
- 54: Verriegelungselementenoberfläche
- 56: Schwenkebene
- 58: Freie Griffmuldenoberfläche
- 60: Gegenstandsschwenkachse
- 62: Rastelement
- 64: Rastelement
- 66: Verriegelungselementhebel
- 68: Gleitfläche
- 70: Gleitfläche
- 72: Lagereinheit
- 74: Rasthebel
- 76: Rasthebelfederelement
- 78: Verriegelungsfederelement

## Patentansprüche

1. Fahrzeugsitzverriegelungsvorrichtung, insbesondere Flugzeugsitzverriegelungsvorrichtung, mit zumindest einem Gegenstand (12), insbesondere einem Tisch, mit einer Lagereinheit (72), die dazu vorgesehen ist, den Gegenstand (12) schwenkbar zu lagern und dazu eine Gegenstandsschwenkachse (60) aufweist um die der Gegenstand (12) schwenkbar gelagert ist, wobei der Gegenstand (12) bei der Bewegung des Gegenstands (12) eine Schwenkbewegung um die Gegenstandsschwenkachse (60) durchläuft, und mit zumindest einer Verriegelungseinheit (14), die zumindest ein Verriegelungselement (16) aufweist und dazu vorgesehen ist, den Gegenstand (12) in zumindest einer Verstaustellung zu verriegeln, wobei die Verriegelungseinheit (14) zumindest eine Zugbetätigungseinheit (18) aufweist, die dazu vorgesehen ist, durch eine Zugbewegung an dem Verriegelungselement (16) betätigbar zu sein,
**dadurch gekennzeichnet, dass**
die Zugbewegung zur Betätigung des Verriegelungselements (16) in zumindest einem Bewegungsabschnitt zumindest eine Bewegungskomponente in Bewegungsrichtung des Gegenstands (12) aufweist, wobei die Bewegungskomponente der Zugbewegung in dem Bewegungsabschnitt im Wesentlichen in Richtung der Schwenkrichtung des Gegenstands (12) ausgerichtet ist.

2. Fahrzeugsitzverriegelungsvorrichtung nach Anspruch 1,
**dadurch gekennzeichnet, dass**
die Verriegelungseinheit (14) zumindest eine Schwenkachse (20) aufweist, um die das Verriegelungselement (16) schwenkbar gelagert ist.

3. Fahrzeugsitzverriegelungsvorrichtung nach Anspruch 2,
**dadurch gekennzeichnet, dass**
die Schwenkachse (20) in einem oberen Bereich (22) des Verriegelungselements (16) angeordnet ist.

4. Fahrzeugsitzverriegelungsvorrichtung nach einem der vorhergehenden Ansprüche,
**dadurch gekennzeichnet, dass**
die Verriegelungseinheit (14) zumindest eine Griffmulde (24) umfasst, die eine Griffmuldenbreite (26) von weniger als 20 cm aufweist.

5. Fahrzeugsitzverriegelungsvorrichtung nach Anspruch 4,
**dadurch gekennzeichnet, dass**
die Griffmulde (24) eine freie Griffmuldenhöhe (28) von weniger als 5 cm aufweist.

6. Fahrzeugsitzverriegelungsvorrichtung nach einem der vorhergehenden Ansprüche,
**dadurch gekennzeichnet, dass**
die Verriegelungseinheit (14) dazu vorgesehen ist, bei Verriegelung des Gegenstands (12) zumindest ein Verriegelungssignal auszugeben.

7. Fahrzeugsitzverriegelungsvorrichtung nach einem der vorhergehenden Ansprüche,
**dadurch gekennzeichnet, dass**
das Verriegelungselement (16) zumindest in einer Verriegelungsstellung bündig mit einer Gegenstandsoberfläche (30) des Gegenstands (12) angeordnet ist.

8. Fahrzeugsitzverriegelungsvorrichtung nach einem der vorhergehenden Ansprüche,
**dadurch gekennzeichnet, dass**
die Verriegelungseinheit (14) zumindest eine Rasteinheit (32) aufweist, die dazu vorgesehen ist, den Gegenstand (12) zu verrasten.

9. Fahrzeugsitzverriegelungsvorrichtung nach einem der vorhergehenden Ansprüche,
**dadurch gekennzeichnet, dass**
die Verriegelungseinheit (14) eine Rückstelleinheit (34) aufweist, die dazu vorgesehen ist, das Verriegelungselement (16) automatisch in eine Ausgangslage zurückzubewegen.

10. Fahrzeugsitzverriegelungsvorrichtung nach einem der vorhergehenden Ansprüche,
**dadurch gekennzeichnet, dass**
die Verriegelungseinheit (14) zumindest einen Auslösemechanismus (36) aufweist, der dazu vorgesehen ist, das Verriegelungselement (16) bei zumindest einer Bewegung des Gegenstands (12) auszulenken.

11. Fahrzeugsitzverriegelungsvorrichtung nach einem der vorhergehenden Ansprüche,
**dadurch gekennzeichnet, dass**
die Verriegelungseinheit (14) dazu vorgesehen ist, den Gegenstand (12) in der Verstaustellung an einer Sitzeinheit (38) zu verriegeln.

12. Fahrzeugsitzverriegelungsvorrichtung nach einem der vorhergehenden Ansprüche,
**dadurch gekennzeichnet, dass**
die Bewegungskomponente in dem Bewegungsabschnitt geneigt zu einer Gegenstandsoberfläche (30) des Gegenstands (12) ausgerichtet ist.

13. Fahrzeugsitzverriegelungsvorrichtung nach einem der vorhergehenden Ansprüche,
**gekennzeichnet durch**
zumindest eine Lagereinheit (72), die dazu vorgesehen ist, den Gegenstand (12) schwenkbar zu lagern.

14. Fahrzeugsitzverriegelungsvorrichtung nach Anspruch 13,
**dadurch gekennzeichnet, dass**
die Bewegungskomponente der Zugbewegung in dem Bewegungsabschnitt zumindest im Wesentlichen in Richtung einer Schwenkrichtung des Gegenstands (12) ausgerichtet ist.

15. Flugzeugsitz mit zumindest einer Sitzeinheit (38) und mit zumindest einer Fahrzeugsitzverriegelungsvorrichtung (10) nach einem der Ansprüche 1 bis 14.

## Claims

1. Vehicle seat locking device, in particular aircraft seat locking device, with at least one object (12), in particular a table, and with a support unit (72) that is configured to support the object (12) pivotally and for this purpose comprises an object pivoting axis (60), the object (12) being supported pivotally around said axis (60) wherein, in a movement of the object (12), the object (12) goes through a pivot movement around the object pivoting axis (60), and with at least one locking unit (14) that comprises at least one locking element (16) and is configured to lock the object (12) in at least one stowage position, wherein the locking unit (14) comprises at least one pull actuation unit (18), which is configured to be actuatable by a pull movement applied to the locking element (16),
**characterised in that** the pull movement for an actuation of the locking element (16) has in at least one movement phase at least one movement component in a movement direction of the object (12) wherein, in the movement phase, the movement component of the pull movement is oriented substantially in a direction of the pivot direction of the object (12).

2. Vehicle seat locking device according to claim 1,
**characterised in that** the locking unit (14) comprises at least one pivot axis (20), the locking element (16) being supported pivotally around said pivot axis (20).

3. Vehicle seat locking device according to claim 2,
**characterised in that** the pivot axis (20) is located in an upper region (22) of the locking element (16).

4. Vehicle seat locking device according to one of the preceding claims,
**characterised in that** the locking unit (14) comprises at least one recessed grip (24) having a recessed-grip width (26) of less than 20 cm.

5. Vehicle seat locking device according to claim 4,
**characterised in that** the recessed grip (24) has a free recessed-grip height (28) of less than 5 cm.

6. Vehicle seat locking device according to one of the preceding claims,
**characterised in that** the locking unit (14) is configured to output, in a locking process of the object (12), at least one locking signal.

7. Vehicle seat locking device according to one of the preceding claims,
**characterised in that,** in at least one locking position, the locking element (16) is arranged flush with an object surface (30) of the object (12).

8. Vehicle seat locking device according to one of the preceding claims,
**characterised in that** the locking unit (14) comprises at least one latch unit (32) that is configured for latching the object (12).

9. Vehicle seat locking device according to one of the preceding claims,
**characterised in that** the locking unit (14) comprises a reset unit (34) that is configured to automatically move the locking element (16) back into a start position.

10. Vehicle seat locking device according to one of the preceding claims,
**characterised in that** the locking unit (14) comprises at least one trigger mechanism (36) that is configured to deflect the locking element (16) in at least one movement of the object (12).

11. Vehicle seat locking device according to one of the preceding claims,
**characterised in that** the locking unit (14) is configured for locking the object (12) on a seat unit (38) in the stowage position.

12. Vehicle seat locking device according to one of the preceding claims,
**characterised in that** the movement component in the movement phase is oriented inclined relative to an object surface (30) of the object (12).

13. Vehicle seat locking device according to one of the preceding claims,
**characterised by** at least one support unit (72) configured to pivotally support the object (12).

14. Vehicle seat locking device according to claim 13,
**characterised in that** the movement component of the pull movement in the movement phase is oriented at least substantially in a direction of a pivot direction of the object (129.

15. Aircraft seat with at least one seat unit (38) and with at least one vehicle seat locking device (10) according to one of claims 1 to 14.

## Revendications

1. Dispositif de verrouillage de siège de véhicule, notamment dispositif de verrouillage de siège d'avion, avec au moins un objet (12), en particulier une table, avec une unité de support (72), qui est configurée à supporter l'objet (12) de manière pivotable et comporte pour ce bût un axe de pivotement d'objet (60), l'objet (12) étant supporté de manière pivotable autour dudit axe (60), l'objet (12) parcourant, en mouvement de l'objet (12), un mouvement pivotant autour de l'axe de pivotement d'objet (60),
et avec au moins une unité de verrouillage (14) comprenant au moins un élément de verrouillage (16) et configurée pour verrouiller l'objet (12) dans au moins une position de rangement, l'unité de verrouillage (14) comprenant au moins une unité d'actionnement-traction (18), laquelle est prévue à être actionnable par le biais d'un mouvement-traction à l'élément de verrouillage (16),
**caractérisé en ce que** le mouvement-traction pour l'actionnement de l'élément de verrouillage (16) aie, en au moins une phase de mouvement, au moins un composant de mouvement dans la direction de mouvement de l'objet (12), le composant de mouvement du mouvement-traction, en la phase de mouvement, étant orienté sensiblement dans la direction de la direction de pivotement de l'objet (12).

2. Dispositif de verrouillage de siège de véhicule selon la revendication 1,
**caractérisé en ce que** l'unité de verrouillage (14) comporte au moins un axe de pivotement (20), l'élément de verrouillage (16) étant supporté de manière pivotable autour dudit axe de pivotement (20).

3. Dispositif de verrouillage de siège de véhicule selon la revendication 2,
**caractérisé en ce que** l'axe de pivotement (20) soit disposé dans une région supérieure (22) de l'élément de verrouillage (16).

4. Dispositif de verrouillage de siège de véhicule selon l'une quelconque des revendications précédentes,
**caractérisé en ce que** l'unité de verrouillage (14) comporte au moins une poignée encastrée (24) ayant une largeur de poignée encastrée (26) de moins de 20 cm.

5. Dispositif de verrouillage de siège de véhicule selon la revendication 4,
**caractérisé en ce que** la poignée encastrée (24) aie une hauteur libre de poignée encastrée (28) de moins de 5 cm.

6. Dispositif de verrouillage de siège de véhicule selon l'une quelconque des revendications précédentes,
**caractérisé en ce que** l'unité de verrouillage (14) soit configurée pour émettre au moins un signal de verrouillage en verrouillant l'objet (12).

7. Dispositif de verrouillage de siège de véhicule selon l'une quelconque des revendications précédentes,
**caractérisé en ce que** l'élément de verrouillage (16) est disposé, en au moins une position de verrouillage, affleurant avec une surface d'objet (30) de l'objet (12).

8. Dispositif de verrouillage de siège de véhicule selon l'une quelconque des revendications précédentes,
**caractérisé en ce que** l'unité de verrouillage (14) comporte au moins une unité d'encliquetage (32), qui est configurée à encliqueter l'objet (12).

9. Dispositif de verrouillage de siège de véhicule selon l'une quelconque des revendications précédentes,
**caractérisé en ce que** l'unité de verrouillage (14) comporte au moins une unité de rappel (34), qui est configurée pour automatiquement mouvoir l'élément de verrouillage (16) retour dans une position originale.

10. Dispositif de verrouillage de siège de véhicule selon l'une quelconque des revendications précédentes,
**caractérisé en ce que** l'unité de verrouillage (14) comporte au moins un mécanisme déclencheur (36), qui est configuré à défléchir l'élément de verrouillage (16) en au moins un mouvement de l'objet (12).

11. Dispositif de verrouillage de siège de véhicule selon l'une quelconque des revendications précédentes,
**caractérisé en ce que** l'unité de verrouillage (14) est configurée à verrouiller l'objet (12) à une unité de siège (38) dans la position de rangement.

12. Dispositif de verrouillage de siège de véhicule selon l'une quelconque des revendications précédentes,
**caractérisé en ce que** le composant de mouvement dans la phase de mouvement est orienté de manière inclinée relativement à une surface d'objet (30) de l'objet (12).

13. Dispositif de verrouillage de siège de véhicule selon l'une quelconque des revendications précédentes,
**caractérisé par** au moins une unité de support (72) configurée à supporter l'objet (12) de manière pivotant.

14. Dispositif de verrouillage de siège de véhicule selon la revendication 13,
**caractérisé en ce que** le composant de mouvement du mouvement-traction dans la phase de mouvement est orienté au moins sensiblement dans la direction d'une direction de pivotement de l'objet (12).

15. Siège d'avion avec au moins une unité de siège (38) et avec au moins un dispositif de verrouillage de siège de véhicule (10) selon l'une quelconque des revendications 1 à 14.
